Europäisches Patentamt

European Patent Office

Office européen des brevets

(19)

(11) EP 1 484 561 A1

(12) EUROPEAN PATENT APPLICATION
published in accordance with Art. 158(3) EPC

(43) Date of publication:
08.12.2004 Bulletin 2004/50

(51) Int Cl.7: F25B 47/02, F24H 1/00,
F25B 1/00, F25B 30/02

(21) Application number: 03734843.0

(22) Date of filing: 27.01.2003

(86) International application number:
PCT/JP2003/000702

(87) International publication number:
WO 2003/064942 (07.08.2003 Gazette 2003/32)

(84) Designated Contracting States:
AT BE BG CH CY CZ DE DK EE ES FI FR GB GR
HU IE IT LI LU MC NL PT SE SI SK TR

(30) Priority: 29.01.2002 JP 2002019505

(71) Applicant: Daikin Industries, Ltd.
Osaka-shi, Osaka 530-8323 (JP)

(72) Inventors:
• NAKAYAMA, Hiroshi,
c/o DAIKIN INDUSTRIES, LTD.
Kusatsu-shi, Shiga 525-8526 (JP)

• SAKAMOTO, Shinichi,
c/o DAIKIN INDUSTRIES, LTD.
Kusatsu-shi, Shiga 525-8526 (JP)

(74) Representative: Goddar, Heinz J., Dr. et al
FORRESTER & BOEHMERT
Pettenkoferstrasse 20-22
80336 München (DE)

(54) **HEAT PUMP TYPE WATER HEATER**

(57) A compressor (25), a water heat exchanger (26) for raising the temperature of warm water, an electric expansion valve (27), and an air heat exchanger (28) are connected sequentially in the given order. A defrost circuit (38) is provided which supplies the air heat exchanger (28) with hot gas from the compressor (25). A defrost operation is started so that the air heat exchanger (28) is provided with hot gas from the compressor (25) and the electric expansion valve (27) is closed to a predetermined valve opening after an elapse of a predetermined length of time since the start of the defrost operation.

FIG. 1

EP 1 484 561 A1

Description

TECHNICAL FIELD

This invention relates to a heat pump type hot water supply apparatus.

BACKGROUND ART

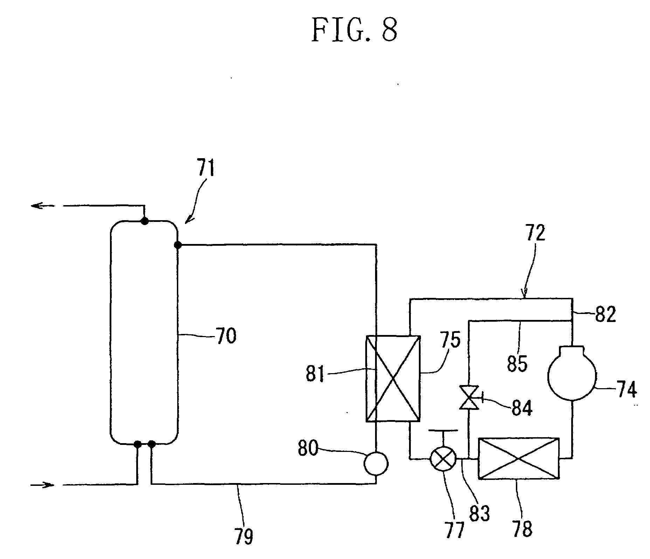

Referring to Figure 8, there is shown a heat pump type hot water supply apparatus having a refrigerant cycle 72 and a hot water supply cycle 71. The refrigerant cycle 72 includes a compressor 74, a hot water supply heat exchanger (utilization side heat exchanger) 75, an electric expansion valve 77, and a heat source side heat exchanger (air heat exchanger) 78 which are all connected sequentially in the given order. On the other hand, the hot water supply cycle 71 includes a hot water storage tank (hot water supply tank) 70 and a circulating path 79. A water circulation pump 80 and a heat exchanging path 81 are inserted in the circulating path 79. In this case, the heat exchanging path 81 is formed by the utilization side heat exchanger (water heat exchanger) 75.

In the above-described heat pump type hot water supply apparatus, when the compressor 74 is activated while the pump 80 is activated (operated), stored water (warm water) flows out through a water intake opening provided in the bottom of the hot water storage tank 70 and enters the circulating path 79. The warm water then flows in the heat exchanging path 81. At that time, the warm water is heated (boiled up) by the water heat exchanger 75. Then, the heated water passes through a hot water inlet opening of the hot water storage tank 70 and is brought back to an upper part of the hot water storage tank 70. In this way, high-temperature warm water is stored in the hot water storage tank 70.

The air heat exchanger 78 functions also as an evaporator. Accordingly, in some cases where the outside air temperature is low, frost formation may occur on the air heat exchanger 78, resulting in a drop in capacity. To cope with this drawback, such a type of heat pump type hot water supply apparatus is able to perform a defrost operation for removing the frost. In other words, a defrost operation of directly supplying the air heat exchanger 78 with hot gas from the compressor 74 is carried out. To this end, for example, a discharge pipe 82 of the compressor 74 and a refrigerant flow path 83 establishing connection between the electric expansion valve 77 and the air heat exchanger 78 are connected together by a defrost circuit 85 provided with a defrost valve 84.

By placing the defrost valve 84 in the open state, hot gas from the compressor 74 is allowed to flow into the defrost circuit 85, and the hot gas is then supplied directly to the air heat exchanger 78 through the defrost circuit 85, whereby the frost formed on the air heat exchanger 78 is melted and removed.

Problems To Be Solved

However, in the above-described conventional heat pump type hot water supply apparatus, refrigerant on the high-pressure side returns to the low-pressure side in a short time at the time when a defrost operation starts. Because of this, the accumulator inserted between the air heat exchanger 78 and the compressor 74 may undergo a so-called overflow, therefore arising the possibility that liquid-back may occur. In addition, if, in order to prevent this, the electric expansion valve 77 is placed in the fully closed state all the time, this results in a drop in refrigerant flow rate. Consequently, the time required for performing a defrost operation extends, therefore causing a drop in average capacity and a drop in reliability of the hot water supply apparatus.

The present invention was made to eliminate the above-described drawbacks with the prior art techniques. Accordingly, an object of the present invention is to provide a heat pump type hot water supply apparatus capable of reducing the time required for performing a defrost operation and, in addition, capable of avoiding the occurrence of liquid-back.

DISCLOSURE OF INVENTION

In order to achieve the aforesaid object, a heat pump type hot water supply apparatus of a first invention is provided in which a compressor 25, a water heat exchanger 26 which heats warm water, an electric expansion valve 27, and an air heat exchanger 28 are connected sequentially in a given order and a defrost circuit 38 for supplying the air heat exchanger 28 with hot gas from the compressor 25 is provided. And, the heat pump type hot water supply apparatus of the first invention is characterized in that a defrost operation is started so that the air heat exchanger 28 is supplied with hot gas from the compressor 25, and that the electric expansion valve 27 is closed to a predetermined valve opening after an elapse of a predetermined length of time since the start of the defrost operation.

In the heat pump type hot water supply apparatus of the first invention, the electric expansion valve 27 is closed to a predetermined valve opening after an elapse of a predetermined length of time since the start of a defrost operation, thereby making it possible to avoid the occurrence of liquid-back during the defrost operation.

A heat pump type hot water supply apparatus of a second invention is provided which is characterized in that the predetermined valve opening of the electric expansion valve 27 is a valve opening at which the electric expansion valve 27 is fully closed.

The heat pump type hot water supply apparatus of the second invention ensures that the occurrence of liquid-back during a defrost operation is avoided.

A heat pump type hot water supply apparatus of a third invention is provided which is characterized in that, after an elapse of a predetermined length of time since the closing of the electric expansion valve **27** to the predetermined valve opening, the electric expansion valve **27** is opened by a predetermined amount of valve opening.

In the heat pump type hot water supply apparatus of the third invention, it is arranged such that, after an elapse of a predetermined length time since the closing of the electric expansion valve **27** to a predetermined valve opening, the electric expansion valve **27** is opened by a predetermined amount of valve opening, thereby preventing the accumulation of refrigerant in the water heat exchanger **28** during the defrost operation. In addition, the drop in refrigerant circulation amount is avoided by opening the electric expansion valve **27**.

A heat pump type hot water supply apparatus of a fourth invention is provided in which a refrigerant adjusting unit **43** for storing an excess of refrigerant is disposed on the high pressure side and a flow rate adjustment valve **44** for controlling the rate of flow of refrigerant passing through the refrigerant adjusting unit **43** is provided on the outlet side of the refrigerant adjusting unit **43**. The heat pump type hot water supply apparatus of the fourth invention is characterized in that, during the defrost operation, the flow rate adjustment valve **44** is placed in its fully closed state.

In the heat pump type hot water supply apparatus of the fourth invention, the flow rate adjustment valve **44** is placed in the fully closed state during a defrost operation, thereby making it possible to prevent the occurrence of liquid-back. In addition, it is possible to stabilize refrigeration cycles during a defrost operation by placing the flow rate adjustment valve **44** in the fully closed state.

A heat pump type hot water supply apparatus of a fifth invention is provided which is characterized in that a supercritical refrigerant for use in a supercritical state is employed as a refrigerant.

In the heat pump type hot water supply apparatus of the fifth invention, a supercritical refrigerant is used and, as a result, the difference between high pressure and low pressure is great. Because of this, the operation/working-effect by closing the electric expansion valve **27** to a predetermined valve opening after an elapse of a predetermined length of time since the start of a defrost operation becomes remarkably available. And, there is no trouble with ozone layer depletion and environmental contamination, and the heat pump type hot water supply apparatus of the fifth invention is a global environment-friendly, heat pump type hot water supply apparatus.

**Effects of Invention**

In accordance with the heat pump type hot water supply apparatus of the first invention, the occurrence of liquid-back during a defrost operation is avoided, thereby making it possible to secure the reliability of the compressor. This achieves improvement in the reliability of the heat pump type hot water supply apparatus, thereby making it possible to stably perform a boiling-up operation.

In accordance with the heat pump type hot water supply apparatus of the second invention, it is ensured that the occurrence of liquid-back during a defrost operation is avoided without fail. This enables the heat pump type hot water supply apparatus to perform a stable boiling-up operation.

In accordance with the heat pump type hot water supply apparatus of the third invention, the accumulation of refrigerant in the water heat exchanger during a defrost operation is prevented. In addition, by opening the electric expansion valve, the drop in refrigerant circulation amount is avoided, thereby making it possible to prevent the time required for performing a defrost operation from increasing. This not only prevents a drop in the capacity (average capacity) of the heat pump type hot water supply apparatus but also secures the reliability of the heat pump type hot water supply apparatus.

In accordance with the heat pump type hot water supply apparatus of the fourth invention, the occurrence of liquid-back is prevented and the reliability of the heat pump type hot water supply apparatus is secured. In addition, it is possible to stabilize a refrigeration cycle during a defrost operation by placing the flow rate adjustment valve in the fully closed state. This makes it possible to reduce the time required for performing a defrost operation, and there is achieved improvement in the boiling-up capacity (average capacity), therefore providing an excellent heat pump type hot water supply apparatus.

In accordance with the heat pump type hot water supply apparatus of the fifth invention, the aforesaid operations and working-effects become successfully available. In addition, a global environment-friendly, heat pump type hot water supply apparatus free from trouble with ozone layer depletion and environmental contamination is obtained.

**BRIEF DESCRIPTION OF DRAWINGS**

Figure **1** is a simplified diagram showing an embodiment of a heat pump type hot water supply apparatus according to the present invention;
Figure **2** is a simplified block diagram of a control part of the heat pump type hot water supply apparatus;
Figure **3** is a time chart diagram of a defrost operation of the heat pump type hot water supply apparatus;
Figure **4** is a diagram graphically showing the boiling-up capacity of the heat pump type hot water supply apparatus;
Figure **5** is a flowchart diagram showing control steps for the start of a defrost operation of the heat pump type hot water supply apparatus;

Figure **6** is a flowchart diagram showing control of the electric expansion valve during the defrost operation of the heat pump type hot water supply apparatus;

Figure **7** is a flowchart diagram showing control of the electric expansion valve during the defrost operation of the heat pump type hot water supply apparatus; and

Figure **8** is a simplified diagram of a conventional heat pump type hot water supply apparatus.

## BEST MODE FOR CARRYING OUT INVENTION

A specific embodiment of a heat pump type hot water supply apparatus in accordance with the present invention will be described in detail with reference to the drawings.

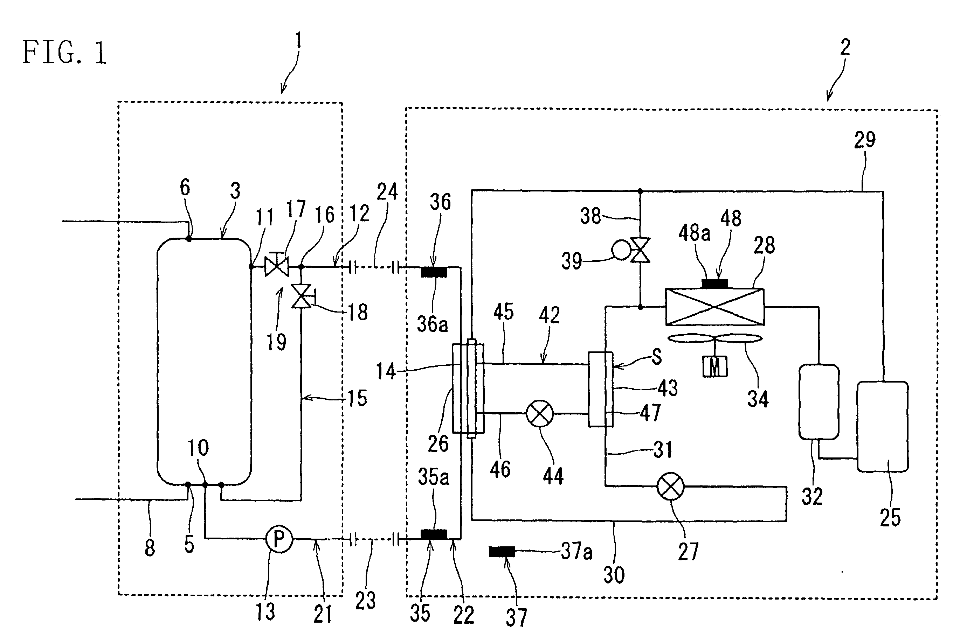

Referring to Figure **1**, there is shown a simplified diagram of the heat pump type hot water supply apparatus. The heat pump type hot water supply apparatus is comprised of a hot water supply cycle **1** and a refrigerant cycle **2**. The hot water supply cycle **1** includes a hot water storage tank **3**, wherein hot water stored in the hot water storage tank **3** is supplied to a bathtub (not shown in the figure) or the like. More specifically, the hot water storage tank **3** is provided, at its bottom wall portion, with a water supply opening **5** and is further provided, at its top wall portion, with a hot water supply opening **6**. And, tap water is supplied to the hot water storage tank **3** from the water supply opening **5** and high-temperature hot water is delivered outwardly from the hot water supply opening **6**.

In addition, in the hot water storage tank **3**, a water intake opening **10** is formed in a portion of the bottom wall and a hot water inlet opening **11** is formed in an upper portion of the side wall (peripheral wall), and the water intake opening **10** and the hot water inlet opening **11** are connected together by a circulating path **12**. And, a water circulation pump **13** and a heat exchanging path **14** are inserted in the circulating path **12**. A water supply flow path **8** is connected to the water supply opening **5**.

Furthermore, a bypass flow path **15** is provided in the circulating path **12**. In other words, the bypass flow path 15 branches off from a part of the circulating path **12** on the side of the hot water intake opening **11**, and is connected to a lower part of the hot water storage tank **3** (a part of the bottom wall in this case). And, inserted between a branch part **16** and the hot water inlet opening **11** is a first switching valve **17**. A second switching valve **18** is inserted on the side of the branch part **16** of the bypass flow path **15**. The switching valves **17** and **18** constitute a bypass switching means **19**. Each of the switching valves **17** and **18** of the bypass switching means **19** is controlled by a control means **20** which will be described later.

When: the first switching valve **17** of the bypass switching means **19** is placed in the open state; the second switching valve **18** is placed in the closed state; and the water circulation pump **13** is activated, warm water is let out from the water intake opening **10** and enters the circulating path **12**. Then, the water flows through the heat exchanging path **14**. And, the water leaves the heat exchanging path **14** and flows into the upper part of the hot water storage tank **3** from the hot water inlet opening **11**. Hereinafter, the state, in which water flows into the upper part of the hot water storage tank **3** through the hot water inlet opening **11**, is called the "normal circulation state".

On the other hand, when: the first switching valve **17** of the bypass switching means **19** is placed in the closed state; the second switching valve **18** is placed in the open state; and the water circulation pump **13** is activated, warm water flows outwardly and enters the circulating path **12** from the water intake opening **10**. Then, the water flows through the heat exchanging path **14**. And, the water leaves the heat exchanging path **14**, flows into the bypass flow path **15** through the branch part **16,** and flows into the lower part of the hot water storage tank **3** from the bypass flow path **15**. Hereinafter, the state, in which water flows into the lower part of the hot water storage tank **3** from the bypass flow path **15**, is called the "bypass circulation state". In the bypass circulation state, warm water (low-temperature water) is not allowed to flow into the upper part of the hot water storage tank **3**.

Furthermore, the circulating path **12** is provided with a pipe **21** on the side of the hot water supply cycle **1** and a pipe **22** on the side of the refrigerant cycle **2**, wherein the pipes **21** and **22** are connected by connection pipes **23** and **24**. Since the connection pipes **23** and **24** are laid outdoors, there is the possibility that the inside of the connection pipes **23** and **24** may freeze when the outside air temperature is low, as will be described later.

The refrigerant cycle (heat pump type heating) **2** includes a refrigerant circulating circuit. The refrigerant circulating circuit is formed by a sequential connection of a compressor **25**, a water heat exchanger **26** which constitutes the heat exchanging path **14**, a pressure reducing mechanism (electric expansion valve) **27**, and an air heat exchanger **28**. More specifically, a discharge pipe **29** of the compressor 25 is connected to the water heat exchanger **26**; the water heat exchanger **26** and the electric expansion valve **27** are connected together by a refrigerant passage way **30**; the electric expansion valve **27** and the air heat exchanger **28** are connected together by a refrigerant passage way **31**; and the air heat exchanger **28** and the compressor **25** are connected together by a refrigerant passage way **33** in which is inserted an accumulator **32**. In addition, a supercritical refrigerant (for example, carbon dioxide gas) for use in a supercritical state is employed as a refrigerant. The air heat exchanger **28** is equipped with a fan **34** for controlling the capacity of the air heat exchanger **28**.

And, the circulating path **12** is provided with an incoming water thermistor **35a** operable to detect the temperature (incoming water temperature) of warm water (low-temperature water) which is let out from the water intake opening **10** and enters the heat exchanging path **14** and an outgoing hot water thermistor **36a** operable to detect the temperature (outgoing hot water temperature) of warm water heated by the heat exchanging path **14**. The air heat exchanger **28** is further provided with an air heat exchanger thermistor **48a** operable to detect the temperature of the air heat exchanger **28**. In addition, the heat pump type hot water supply apparatus of Figure **1** is provided with an outside air temperature detection thermistor **37a** operable to detect the temperature of outside air.

Furthermore, the discharge pipe **29** and the refrigerant passage way **31** (a position in a passage way connecting together the electric expansion valve **27** and the air heat exchanger **28**, being located immediately before the air heat exchanger **28**), are connected together by a defrost circuit **38** provided with a defrost valve **39**. More specifically, hot gas from the compressor **25** is supplied directly to the air heat exchanger **28** which functions as an evaporator, thereby making it possible to perform a defrost operation for removing the frost from on the evaporator **28**. The refrigerant cycle **2** is able to perform a normal hot water boiling-up operation and a defrost operation.

Furthermore, a bypass circuit **42** is provided which branches off from the refrigerant circulating circuit on the high-pressure side and which merges into the refrigerant circulating circuit at a position downstream of the branch part. A refrigerant adjusting unit **43** is inserted in the bypass circuit **42**. In addition, an adjustment valve **44** for flow rate adjustment is provided on the outlet side of the refrigerant adjusting unit **43**. More specifically, the bypass circuit **42** includes a first passage way **45** which branches off from upstream of the water heat exchanger **26** and which is connected to the refrigerant adjusting unit **43**, and a second passage way **46** which extends from the refrigerant adjusting unit **43** and which merges with the water heat exchanger **26** on the side downstream of the branch part of the first passage way **54**. And, the flow rate adjustment valve **44** is inserted in the second passage way **46**.

In the inside of the refrigerant adjusting unit **43**, a passage way **47** constituting a part of the refrigerant passage way **31** is arranged, wherein high-pressure refrigerant which has entered the refrigerant adjusting unit **43** through the bypass circuit **42** and low-pressure refrigerant flowing through the passage way **47** are subjected to heat exchange. In this case, the rate of flow of refrigerant passing through the inside of the refrigerant adjusting unit **43** is adjusted by controlling the valve opening of the adjustment valve **44**, and the temperature of refrigerant in the refrigerant adjusting unit **43** is controlled, the reason for which is as follows. By the controlling of the valve opening of the flow rate adjustment valve **44**, the refrigerant temperature is maintained at a requested value, and the inside of the refrigerant adjusting unit **43** is made to hold an adequate amount of refrigerant, thereby optimizing the amount of refrigerant circulating in the circuit.

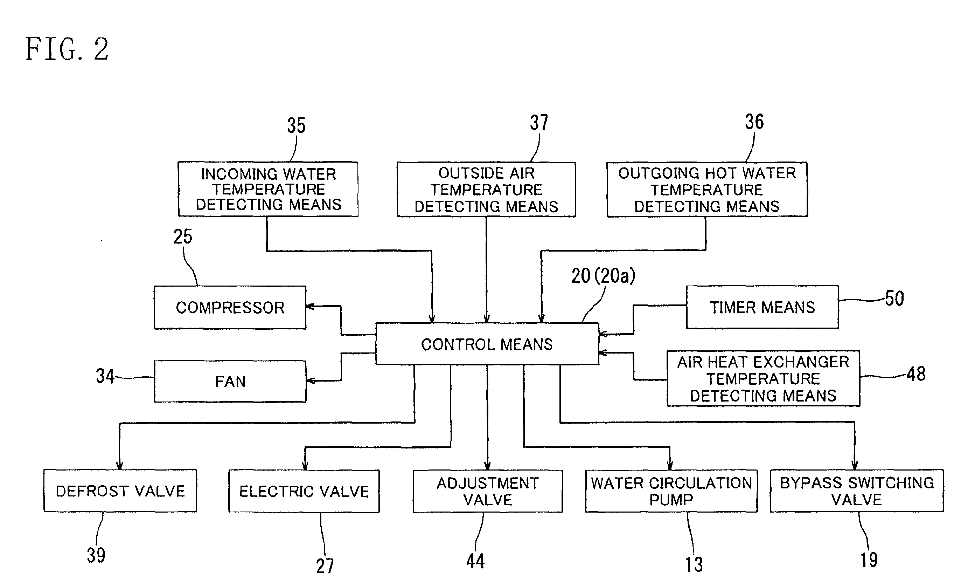

The heat pump type hot water supply apparatus has a control part which is provided with an incoming water temperature detecting means **35**, an outgoing hot water temperature detecting means **36**, an outside air temperature detecting means **37**, an air heat exchanger temperature detecting means **48**, a timer means **50**, a control means **20**, and other components (see Figure 2). Data from these detecting means **35**, **36**, **37**, **48** and data from the timer means **50** are all fed to the control means **20**. Based on the data, the control means **20** sends control signals to the compressor **25**, to the defrost valve **39**, and to other components. In response to the control signals, the compressor **25** and other components are activated.

The incoming water temperature detecting means **35** is formed by the incoming water thermistor **35a**. The outgoing hot water temperature detecting means **36** is formed by the outgoing hot water thermistor **36a**. The outside air temperature detecting means **37** is formed by the outside air temperature detecting thermistor **37a**. The air heat exchanger temperature detecting means **48** is formed by the air heat exchanger thermistor **48a**. In addition, the timer means **50** is formed by an existing timer or the like capable of measuring time. The timer means **50** is provided with a timer TD0, a timer TD1, a timer TD2 et cetera, as will be described later. Finally, the control means **20** is formed by for example a microcomputer.

In accordance with the heat pump type hot water supply apparatus as constructed above, when: the bypass switching means **19** is placed in the normal circulation state; the defrost valve **39** is placed in the closed state; the compressor **25** is activated; and the water circulation pump **13** is activated (operated), water (low-temperature water) stored in the hot water storage tank **3** is let out from the water intake opening **10** formed at the bottom part of the hot water storage tank **3** and flows through the heat exchanging path **14** of the circulating path **12**. At that time, the low-temperature water is heated (boiled up) by the water heat exchanger **26** and is forced to flow back or flow into the upper part of the hot water storage tank **3** from the hot water inlet opening **11**. Such an operation is carried out continuously, thereby making it possible to store high-temperature hot water in the hot water storage tank **3**.

And, in the heat pump type hot water supply apparatus, the control means **20** makes it possible to conclude that the air heat exchanger **28** becomes frosted, when the boiling-up capacity falls to a predetermined low capacity or when the average of accumulated values of the boiling-up capacity found at predetermined intervals of time drops a given number of times consecutively. In other words, the boiling-up capacity when there is frost formation on the air heat exchanger **28** is lower than when there is no frost formation, and it is therefore possible to conclude that the air heat exchanger **28** becomes frosted if the boiling-up capacity falls down to a given low boiling-up capacity. This capacity (CAP) is found by the following mathematical expression (1).

$$CAP = KCAP \times PSR \times (DB - DTO) \qquad (1),$$

where:

CAP: instantaneous capacity
KCAP: instantaneous capacity calculation coefficient
PSR: pump output
DB: outgoing hot water temperature
DTO: incoming water temperature

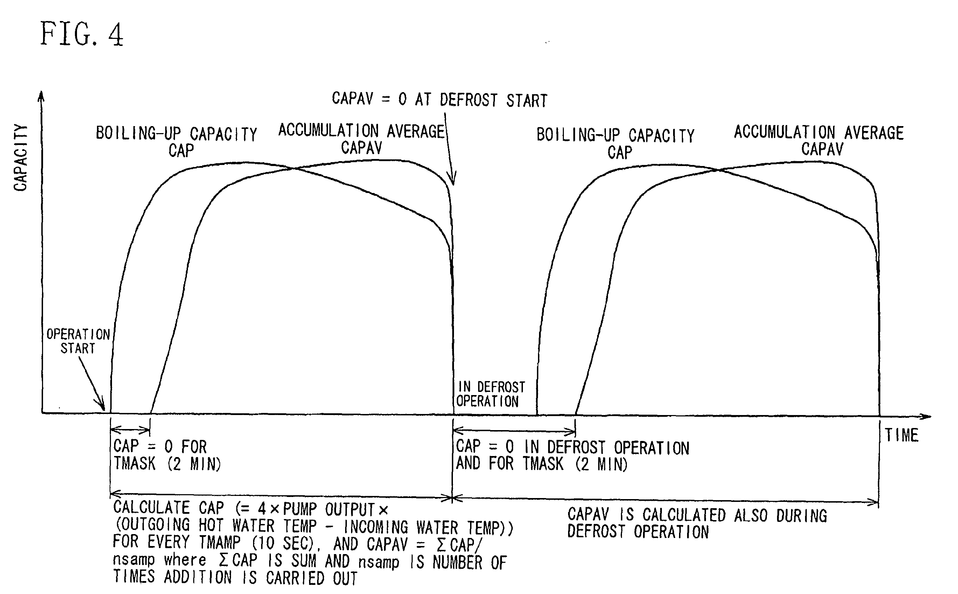

In this way, the boiling-up capacity is found by: CAP = coefficient x pump output x (outgoing hot water temperature - incoming water temperature). In this case, the incoming water temperature is detected by the incoming water thermistor **35a** and the outgoing hot water temperature is detected by the outgoing hot water thermistor **36a**. And, the boiling-up capacity draws a wave form as shown in Figure **4**, and when the capacity falls down to a predetermined value, a defrost operation starts. As the capacity index of the water circulation pump **13**, pump command value, rotation number et cetera may be used in addition to the pump output and the pump capacity index is one proportional to the amount of water circulating through the water circulation pump **13**.

In addition, when finding the average of accumulated values of the boiling-up capacity at predetermined intervals of time, the capacity is calculated at predetermined intervals of time (TSAMP: for example, for every ten seconds), and from a sum of the calculation results, an accumulated value average is obtained by the following mathematical expression (2). Here, CAPAV is the average capacity. ΣCAP is the CAP (boiling-up capacity) accumulated value, and NSAMP is the number of times that accumulation is carried out. And, it can be concluded that the air heat exchanger **28** becomes frosted when the accumulated value average drops a predetermined number of times consecutively (for example, five consecutive times). CAP (boiling-up capacity) is zero until the count time of a timer TMASK (for example, two minutes) elapses since the operation start. In addition, CAPAV is zero at the start of a defrost operation, and the boiling-up capacity (CAP) is zero during the defrost operation and during the counting operation of the timer TMASK. CAPAV is calculated also during the defrost operation.

$$CAPAV = \Sigma CAP/NSAMP \qquad (2),$$

where:

CAPAV: average capacity
ΣCAP: CAP accumulated value
NSAMP: number of times accumulation is carried out

As described above, when it is concluded that the air heat exchanger **28** becomes frosted, a defrost operation is carried out. The defrost operation is started by supplying hot gas to the air heat exchanger **28** with the water circulation pump **13** held in abeyance. In this case, if the defrost operation is carried out continuously for a long period of time, this produces the danger that the circulating path **12** (especially the inside of the connection pipes **23** and **24** arranged outdoors) freezes. To cope with this, a pipe antifreeze operation, in which the water circulation pump **13** is activated, is carried out. The pipe antifreeze operation is controlled by a defrost control means **20a** formed by the control means **20**.

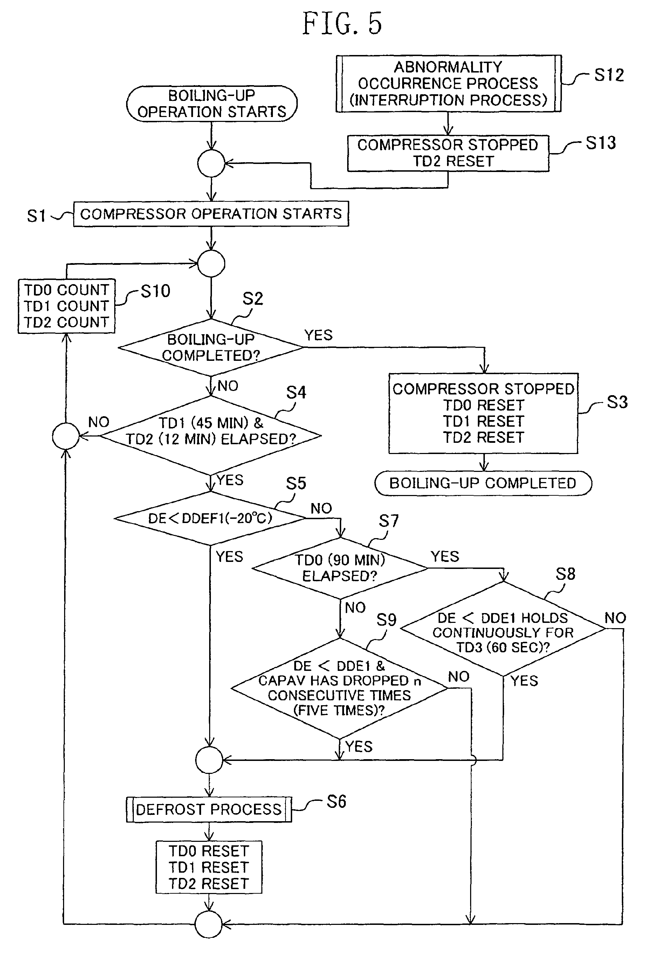

Referring to the flowchart diagram of Figure **5**, control steps for the start of a defrost operation in the heat pump type hot water supply apparatus will be described. The bypass switching means **19** is placed in a state to start a boiling-up operation (i.e., the normal circulation state) and, in addition, the defrost valve **39** is placed in the closed state, and the compressor **25** starts operating (Step S1). Here, if an abnormality, such as no warm water in the hot water storage tank **3**, is detected, this requires execution of a process for dealing with the occurring abnormality (Step S12) so that the compressor **25** is stopped (Step S13) and, thereafter, that the defrost start prevention timer TD2 is reset.

After setting the compressor **25** in operation (Step S1), it is decided whether or not the boiling-up operation has been completed (Step S2). If decided that the boiling-up operation has been completed in Step S2, then the compressor **25** is stopped in Step S3 and each of the TD0, TD1, TD2 timers is reset and the boiling-up operation is terminated (completed).

On the other hand, if in Step S2 it is decided that the boiling-up operation has not been completed yet, then the procedure moves to Step S4. In Step S4 it is decided whether or not the count time of TD 1 (for example, 45 minutes) has elapsed and it is also decided whether or not the count time of TD2 (for example, 12 minutes) has elapsed. If decided that they have not yet elapsed, there is made a wait until TD0, TD1, and TD2 have elapsed (Step S10). On the other hand, if decided that they have elapsed, then the procedure moves to Step S5. Here, TD0 is a defrost start decision switching boiling-up operation accumulation timer and its count time is for example 90 minutes. TD1 is a boiling-up operation accumulation timer and its count time is for example 45 minutes.

In Step S5 it is decided whether or not DE < DDEF1 (- 20 °C) holds. Here, DE indicates the temperature of the air heat exchanger **28** detected by the air heat exchanger thermistor **48** and DDEF1 indicates the defrost start decision air heat exchanger temperature. DDEF1 is set to for example - 20 °C. In other words, if the temperature of the air heat exchanger **28** is lower than - 20 °C, then the procedure moves to Step S6 to perform a frost removing operation (defrost operation).

In addition, if the temperature of the air heat exchanger **28** is not less than - 20 °C in Step S5, then the procedure moves to Step S7. In Step S7 it is decided whether or not TD0 (for example, 90 minutes) has elapsed. If decided that TD0 has elapsed, then the procedure moves to Step S8. If not, then the procedure moves to Step S9.

In Step S8 it is decided whether or not DE < DDE1 has held continuously for the count time of the TD3. Here, DDE1 indicates the defrost start decision temperature (reference temperature), e.g., (outside air temperature - 9) °C. In other words, a reference temperature lower than the outside air temperature by a predetermined temperature (9 °C in this case) is set, and there is made a comparison between the temperature of the air heat exchanger **28** and the reference temperature; however, - 20 °C ≤ DDE1 ≤ - 4 °C. In addition, TD3 is a defrost start determination continuation timer and is set to for example a period of 60 seconds.

If the condition is satisfied in Step S8, i.e., if the temperature of the air heat exchanger **28** falls below the reference temperature, then the procedure moves to Step S6. If not satisfied, then the procedure moves to Step S2 from Step S10.

Furthermore, in Step S9, the accumulated value average of the boiling-up capacity is found at predetermined intervals of time (for example, 10 seconds) with the condition of DE < DDE1 held, and it is decided whether or not the accumulated average value drops a predetermined number of times consecutively (for example, five consecutive times). If the condition is satisfied, then the procedure moves to Step S6. If not satisfied, then the procedure moves to Step S2 from Step S 10.

The defrost process of Step S6 is carried out until the cancellation of the defrost operation. And, after Step S6 is completed, each timer (TDO, TD1, TD2) is reset. Thereafter, the procedure move to Step S2 from Step S10 and the boiling-up operation is started again, and in Step S2 it is decided whether or not the boiling-up operation has been completed. Thereafter, the processing procedure is repeatedly carried out.

In the heat pump type hot water supply apparatus, if the temperature (DE) of the air heat exchanger **28** is lower than the defrost start decision air heat exchanger temperature (DDEF1), then a defrost operation is carried out. If not, decision about the presence or absence of frost formation is made based on the temperature (DE) of the air heat exchanger **28** and on the accumulated value average (CAPAV), when the operation continuation time (TDO) is short. On the other hand, when frost formation is liable to take place because the operation continuation time (TDO) is great, decision about the presence or absence of frost formation is made based on the temperature (DE) of the air heat exchanger **28**. Such arrangement makes it possible to ensure that, if there is frost formation on the air heat exchanger **28**, the frost formation is detected without fail, and it further becomes possible to avoid performing an unnecessary defrost operation when there is no frost formation. In other words, when a defrost operation is being carried out, it is impossible to perform a boiling-up operation, therefore resulting in a drop in hot water supply efficiency. In the heat pump type hot water supply apparatus of the present invention, however, it becomes possible to achieve improvement in capacity and efficiency of the hot water supply apparatus by avoiding performing a wasteful defrost operation.

And now, if the incoming water temperature used in calculating a boiling-up capacity increases, this decreases the calculated value of the boiling-up capacity. Therefore, if frost formation decision is made based on the boiling-up capacity and the temperature of the air heat exchanger **28**, this makes it possible for the decision to be made correctly. In other words, at the time when the incoming water temperature increases, the temperature of the air heat exchanger **28** also increases. Therefore, erroneous detection is unlikely to be made.

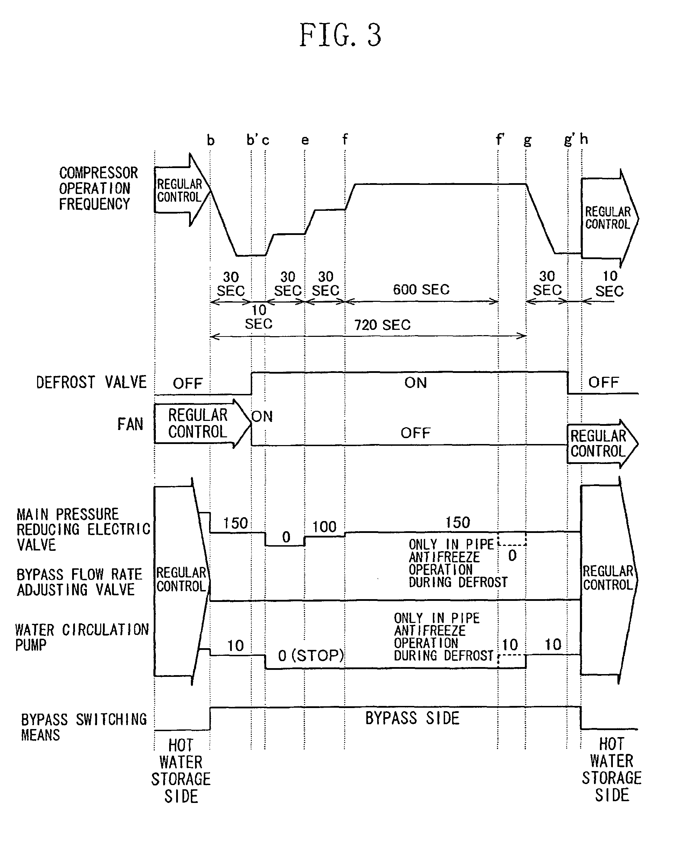

In the next place, control of the defrost operation will be described according to the time chart diagram of Figure **3**.

If it is decided that a defrost operation should be started, then a defrost operation start signal is issued at a point *b* of Figure **3**. Consequently, the frequency of the compressor **25** is decreased to a predetermined value (for example, 40 Hz) and the valve opening of the electric expansion valve (main pressure reducing electric expansion valve) **27** is reduced to a predetermined valve opening value of for example 150 pulses. In addition, the adjustment valve (bypass flow rate adjusting valve) **44** is placed in the fully closed state and the water circulation pump **13** is decreased in defrost valve switching time pump capacity command value to for example 10 rpm. In addition, the bypass switching means **19** is switched to the bypass circulation state (bypass side).

At a point *b'* where a predetermined length of time (for example, 30 seconds) has elapsed since the above state, the defrost valve **39** is placed in the open state and the fan **34** is stopped. As a result, hot gas is supplied to the air heat exchanger **28**. The reason for lowering the operating frequency of the compressor **25** in the range between the point *b* and the point *b'* is: to achieve a reduction in differential pressure in the inside of the refrigerant circulating circuit for ensuring that the defrost valve **39** is switched without fail, to reduce shock noises generated when the defrost valve **39** is switched, and to prevent the compressor **25** from stepping out.

At a point *c* where a predetermined length of time (for example, 10 seconds) has elapsed since the moment that the defrost valve **39** was placed in the open state, the electric expansion valve **27** is placed in the fully closed state; the water circulation pump **13** is stopped; and the frequency of the compressor 25 is increased up to 58 Hz. At a point e where a predetermined length of time (for example, 30 seconds) has elapsed since then, the electric expansion valve **27** is opened to a predetermined valve opening, e.g., the valve **27** is opened to a small valve opening of for example 100 pulses and the frequency of the compressor **25** is increased up to 76 Hz.

At a point *f* where a predetermined length of time (for example, 30 seconds) has elapsed since the moment that the electric expansion valve **27** was opened by the small amount of valve opening, the valve opening of the electric expansion valve **27** is opened to a predetermined value of for example 150 pulses and the frequency of the compressor **25** is increased up to 90 Hz. The reason for not stopping the water circulation pump **13** in the range between the point *b* and the point *c* is to prevent the water heat exchanger **26** from excessively increasing in temperature.

And, at a point *f* 'where such a condition that the outside air temperature is not more than a predetermined low temperature (for example, 0 °C) continues for a predetermined length of time (for example, 600 seconds) from the point *f*, the electric expansion valve **27** is placed in the fully closed state and the water circulation pump **13** is activated at a defrost operation period pump capacity command value (for example, 10 rpm) for performing a pipe antifreeze operation. The reason is that the water in the circulating path **12**, if it is not circulated in this state, may freeze in the circulating path **12** because the water in the circulating path **12** has not been circulated over a long period of time. Here, the reason for placing the electric expansion valve **27** in the fully closed state is that, if the electric expansion valve **27** is placed in the open state, the circulated water draws heat from the refrigerant and, as a result, the frost formed on the air heat exchanger **28** cannot be melted sufficiently. If the outside air temperature during the defrost operation exceeds the predetermined low temperature or if the defrost operation time does not continue for a predetermined length of time, then the water circulation pump **13** is not activated during the defrost operation. The reason for this is that in such conditions there is no danger that the inside of the circulating path **12** freezes.

From a point *g* (at which the valve opening of the electric expansion valve **27** is brought back to 150 pulses) where a predetermined length of time (for example, 720 seconds) has elapsed since the point *b*, the frequency of the compressor **25** starts being lowered. At a point *g'* where a predetermined length of time (for example, 30 seconds) has elapsed since the point *g*, the defrost valve **39** is placed in the closed state. At a point h where a predetermined length of time (for example, 10 seconds) has elapsed since then, the operation returns to the normal boiling-up control. The reason for setting the water circulation pump **13** in operation in the range between the point *g* and the point *h* prior to the normal control is to correctly detect the temperature of incoming water. In addition, the reason for placing the adjustment valve **44** in the fully closed state during the defrost operation between the point *b* and the point *h* is to prevent the occurrence of liquid-back when the defrost valve **39** is placed in the open state and to stabilize a refrigeration cycle during the defrost operation. Furthermore, the reason for lowering the frequency of the compressor 25 in the range between the point g and point g' is the same as that for lowering the frequency of the compressor **25** in the range between the point *b* and the point *b'*.

In addition, in the aforesaid time chart, the defrost operation is stopped (cancelled) at the point *g'* where the predetermined length of time has elapsed since the point b; however, the defrost operation may be cancelled on the basis of the temperature of the air heat exchanger **28**. More specifically, a defrost cancellation decision temperature (DDE2) is set, and the defrost operation is cancelled when DE > DDE2 holds. DDE2 can be found, for example by: DDE2 = DOAT + 10 (°C). Here, DOAT indicates the outside air temperature. In this case, $4 °C \leq DDE2 \leq 12 °C$.

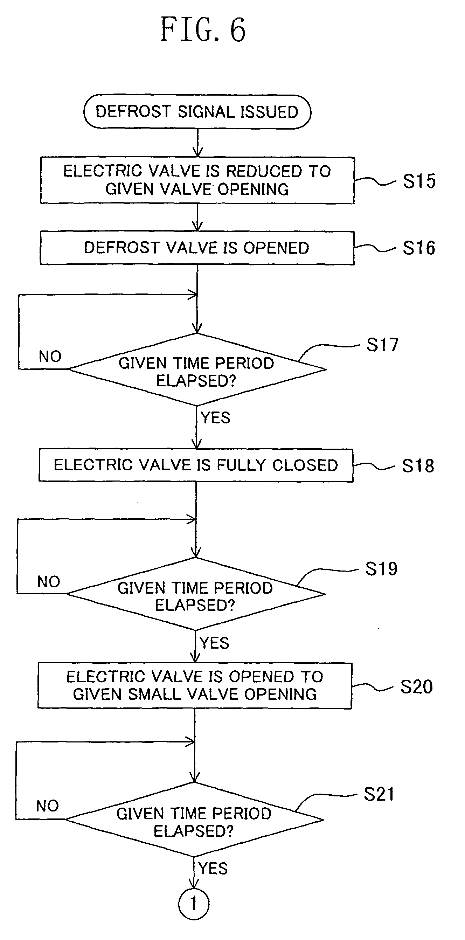

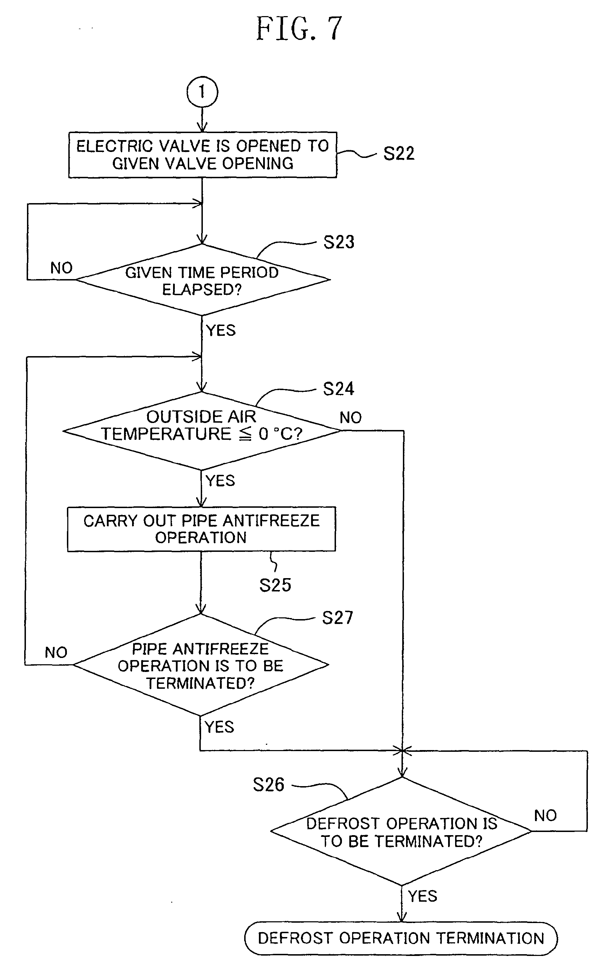

In the next place, referring to the flow chart diagrams of Figures **6** and **7**, the operation (control) of the valve opening of the electric expansion valve **27** when the defrost operation is continued for a predetermined long period of time, will be described further.

If the defrost signal is issued, the procedure moves to Step S15, and the valve opening of the electric expansion valve **27** is reduced to a predetermined value of for example 150 pulses. Thereafter, after elapse of a predetermined length of time (for example, 30 seconds), the procedure moves to Step S16. The defrost valve **39** is placed in the open state so that hot gas starts being supplied to the air heat exchanger **28**. Then, the procedure moves to Step S17 and it is decided whether or not a predetermined length of time (for example, 40 seconds) has elapsed since the valve opening of the electric expansion valve **27** was reduced to the aforesaid value. And, there is made a wait until the predetermined length of time will have elapsed. When elapsed, then the procedure moves to Step S18 and the electric expansion valve **27** is placed in the fully closed state.

Thereafter, the procedure moves to Step S19 and it is decided whether or not a predetermined length of time (for example, 30 seconds) has elapsed since the electric expansion valve **27** was placed in the fully closed state. And, there is made a wait until the predetermined length of time will have elapsed. When elapsed, the procedure moves to Step S20 and the valve opening of the electric expansion valve **27** is opened to a predetermined small value of for example 100 pulses. Thereafter, the procedure moves to Step S21 and it is decided whether or not a predetermined length of time (for example, 30 seconds) has elapsed since the valve opening of the electric expansion valve **27** was opened to the predetermined small value.

There is made a wait until the predetermined length of time will have elapsed. When elapsed, the procedure moves to Step S22 and the valve opening of the electric expansion valve **27** is brought back to a predetermined value of for example 150 pulses. It is decided whether or not a predetermine length of time (for example, 600 seconds) has elapsed since the valve opening of the electric expansion valve **27** was set to the predetermined value. And, there is made a wait until the predetermined length of time will have elapsed. When elapsed, the procedure moves to Step S24, and it is decided whether or not the outside air temperature is not more than 0 °C. If the outside air temperature ≤ 0 °C, then the procedure moves to Step S25. On the other hand, if the outside air temperature is in excess of 0 °C, then the procedure moves to Step S26.

In Step S25, a pipe antifreeze operation is carried out. In other words, the water circulation pump **13** is activated at a predetermined pump command value (for example, 10 rpm) and the warm water in the circulating path **12** is circulated. At this time, the electric expansion valve **27** is placed in the fully closed state. In addition, after execution of the pipe antifreeze operation, the procedure moves to Step S27 and it is decided whether or not the pipe antifreeze operation has been completed. In Step S27, it is decided whether or not a predetermined length of time (for example, 720 seconds) has elapsed since the issue of the defrost operation signal. If elapsed, then the procedure moves to Step S26. If not elapsed, then the procedure moves back to Step S24. The pipe antifreeze operation is terminated if the outside air temperature exceeds 0 °C.

If it is decided that the pipe antifreeze operation has been terminated, then the valve opening of the electric expansion valve **27** is brought back to the aforesaid predetermined value (150 pulses) while the water circulation pump **13** remains in operation. And, in Step S26, it is decided whether or not the defrost operation is to be terminated. If it is decided that the defrost operation is to be terminated, then the defrost operation is terminated. Decision whether or not the defrost operation is to be terminated is made based on the time elapsed since the issue of the defrost operation signal or based on the temperature of the air heat exchanger **28**.

As described above, in the heat pump type hot water supply apparatus, the occurrence of liquid-back after the defrost valve **39** is placed in the open state is prevented by controlling the valve opening of the electric expansion valve **27** during the defrost operation (between the point *c* and the point *f* of Figure **3**). In addition, by placing the electric expansion valve **27** in the open state thereafter, the accumulation of refrigerant in the water heat exchanger **26** during the defrost operation is prevented. This therefore improves the reliability of the heat pump type hot water supply apparatus, thereby making it possible to perform a stable boiling-up operation.

In addition, when there is frost formation on the air heat exchanger **28**, the frost on the air heat exchanger **28** is melted by a supply of hog gas from the compressor **25** to the air heat exchanger **28.** Besides, for example, if the defrost operation is continued over a long period of time when the outside air temperature is low (for example, ≤ 0 °C), the water circulation pump **13** is activated, thereby preventing the inside of the circulating path 12 from freezing.

Furthermore, even when the water circulation pump **13** is activated during the defrost operation, the warm water in the circulating path **12** flows through the bypass circuit **15** but does not flow into the upper part of the hot water storage tank **3**. In other words, high-temperature hot water in the upper part of the hot water storage tank **3** will not be mixed with low-temperature warm water. Therefore, the drop in temperature of hot water that is supplied from the hot water storage tank **3** to a bathtub et cetera is prevented. As a result of such arrangement, it is possible to prevent the temperature of hot water held in the hot water storage tank **3** from falling due to the execution of a defrost operation, thereby making it possible to avoid the extension of a subsequent boiling-up operation and to reduce running costs.

In the above, the specific embodiments of the present invention have been described, but they should not in any way be deemed restrictive. It is to be understood that changes and variations may be made without departing from the scope of the present invention. For example, the time, serving as a predetermined length of time based on which the valve opening of the electric expansion valve **27** is closed to a predetermined value after a defrost operation is started, can be changed within the range over which liquid-back or the like does not occur after the defrost valve **39** is opened. Furthermore, the valve opening, serving as a predetermined value based on which the electric expansion valve **27**, closed to the aforesaid predetermined valve opening value, is opened, can be changed within the range over which the accumulation of refrigerant in the water heat exchanger 26 during the defrost operation is prevented.

Preferably carbon dioxide gas is used as a refrigerant for use in the refrigerant circulating circuit. Other than carbon dioxide gas, dichlorodifluoromethane (R-12) or chlorodifluoromethane (R-22) may be used. Substitute refrigerants, such as 1,1,1,2-tetrafluoroethane (R-134a), may be used in view of the problems such as ozone layer depletion and environmental contamination.

**INDUSTRIAL APPLICABILITY**

As has been described above, the present invention is useful for a heat pump type hot water supply apparatus having a hot water supplying cycle and a refrigerant cycle and the heat pump type hot water supply apparatus of the present invention is suitable particularly when performing a defrost operation.

**Claims**

1. A heat pump type hot water supply apparatus in which a compressor **(25)**, a water heat exchanger **(26)** which heats warm water, an electric expansion valve **(27)**, and an air heat exchanger **(28)** are connected sequentially in a given order, said heat pump type hot water supply apparatus further including a defrost circuit **(38)** for supplying said air heat exchanger **(28)** with hot gas from said compressor **(25)**,

   wherein a defrost operation is started so that said air heat exchanger **(28)** is supplied with hot gas from said compressor **(25)**, and wherein said electric expansion valve **(27)** is closed to a predetermined valve opening after an elapse of a predetermined length of time since the start of said defrost operation.

2. The heat pump type hot water supply apparatus of claim 1, wherein said predetermined valve opening of said electric expansion valve **(27)** is a valve opening at which said electric expansion valve **(27)** is fully closed.

3. The heat pump type hot water supply apparatus of either claim 1 or claim 2, wherein, after an elapse of a predetermined length of time since the closing of said electric expansion valve **(27)** to said predetermined valve opening, said electric expansion valve **(27)** is opened by a predetermined amount of valve opening.

4. The heat pump type hot water supply apparatus of claim 1 in which a refrigerant adjusting unit **(43)** for storing an excess of refrigerant is disposed on the high pressure side and a flow rate adjustment valve **(44)** for controlling the rate of flow of refrigerant passing through said refrigerant adjusting unit **(43)** is provided on the outlet side of said refrigerant adjusting unit **(43)**,

   wherein, during said defrost operation, said flow rate adjustment valve **(44)** is placed in its fully closed state.

5. The heat pump type hot water supply apparatus of claim 1, wherein a supercritical refrigerant for use in a supercritical state is employed as a refrigerant.

FIG. 1

EP 1 484 561 A1

FIG. 2

# FIG. 3

# FIG. 4

CAPAV = 0 AT DEFROST START

CAPACITY

BOILING-UP CAPACITY CAP     ACCUMULATION AVERAGE CAPAV

BOILING-UP CAPACITY CAP     ACCUMULATION AVERAGE CAPAV

OPERATION START

IN DEFROST OPERATION

CAP = 0 FOR TMASK (2 MIN)

CAP = 0 IN DEFROST OPERATION AND FOR TMASK (2 MIN)

TIME

CALCULATE CAP (= 4 × PUMP OUTPUT × (OUTGOING HOT WATER TEMP − INCOMING WATER TEMP)) FOR EVERY TMAMP (10 SEC), AND CAPAV = ΣCAP/ nsamp where ΣCAP IS SUM AND nsamp IS NUMBER OF TIMES ADDITION IS CARRIED OUT

CAPAV IS CALCULATED ALSO DURING DEFROST OPERATION

# FIG. 5

ABNORMALITY
OCCURRENCE PROCESS
(INTERRUPTION PROCESS) — S12

↓

COMPRESSOR STOPPED
TD2 RESET — S13

BOILING-UP
OPERATION STARTS

↓

S1 — COMPRESSOR OPERATION STARTS

↓

TD0 COUNT
TD1 COUNT — S10
TD2 COUNT

S2

BOILING-UP
COMPLETED? — YES

NO

S4

TD1 (45 MIN) &
TD2 (12 MIN) ELAPSED? — NO

YES

COMPRESSOR STOPPED
TD0 RESET
TD1 RESET — S3
TD2 RESET

↓

BOILING-UP COMPLETED

S5

$DE < DDEF1(-20°C)$ — NO

YES

S7

TD0 (90 MIN)
ELAPSED? — YES

NO

S8

DE < DDE1 HOLDS
CONTINUOUSLY FOR
TD3 (60 SEC)? — NO

YES

S9

DE < DDE1 &
CAPAV HAS DROPPED n
CONSECUTIVE TIMES
(FIVE TIMES)? — NO

YES

DEFROST PROCESS — S6

↓

TD0 RESET
TD1 RESET
TD2 RESET

# FIG. 6

```
        ( DEFROST SIGNAL ISSUED )
                    │
                    ▼
    ┌─────────────────────────────┐
    │  ELECTRIC VALVE IS REDUCED TO │───── S15
    │     GIVEN VALVE OPENING       │
    └─────────────────────────────┘
                    │
                    ▼
    ┌─────────────────────────────┐
    │    DEFROST VALVE IS OPENED    │───── S16
    └─────────────────────────────┘
                    │
          ┌─────────┤
          │         ▼
    NO    ◇  GIVEN TIME PERIOD  ◇───── S17
    ◄─────◇      ELAPSED?       ◇
                    │
                   YES
                    ▼
    ┌─────────────────────────────┐
    │  ELECTRIC VALVE IS FULLY CLOSED │─── S18
    └─────────────────────────────┘
                    │
          ┌─────────┤
          │         ▼
    NO    ◇  GIVEN TIME PERIOD  ◇───── S19
    ◄─────◇      ELAPSED?       ◇
                    │
                   YES
                    ▼
    ┌─────────────────────────────┐
    │  ELECTRIC VALVE IS OPENED TO  │───── S20
    │   GIVEN SMALL VALVE OPENING   │
    └─────────────────────────────┘
                    │
          ┌─────────┤
          │         ▼
    NO    ◇  GIVEN TIME PERIOD  ◇───── S21
    ◄─────◇      ELAPSED?       ◇
                    │
                   YES
                    ▼
                   (1)
```

# FIG. 7

① 1

ELECTRIC VALVE IS OPENED TO
GIVEN VALVE OPENING — S22

GIVEN TIME PERIOD
ELAPSED? — S23

NO

YES

OUTSIDE AIR
TEMPERATURE ≦ 0 °C? — S24

NO

YES

CARRY OUT PIPE ANTIFREEZE
OPERATION

S25

PIPE ANTIFREEZE
OPERATION IS TO BE
TERMINATED? — S27

NO

YES

S26

DEFROST OPERATION IS
TO BE TERMINATED?

NO

YES

DEFROST OPERATION TERMINATION

FIG. 8

## INTERNATIONAL SEARCH REPORT

| International application No. |
| --- |
| PCT/JP03/00702 |

**A. CLASSIFICATION OF SUBJECT MATTER**
  Int.Cl$^7$  F25B47/02, F24H1/00, F25B1/00, F25B30/02

According to International Patent Classification (IPC) or to both national classification and IPC

**B. FIELDS SEARCHED**

Minimum documentation searched (classification system followed by classification symbols)
  Int.Cl$^7$  F25B47/02, F24H1/00, F25B1/00, F25B30/02

Documentation searched other than minimum documentation to the extent that such documents are included in the fields searched
  Jitsuyo Shinan Koho        1922-1996   Toroku Jitsuyo Shinan Koho   1994-2003
  Kokai Jitsuyo Shinan Koho  1971-2003   Jitsuyo Shinan Toroku Koho   1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 61-29649 A (Matsushita Electric Industrial Co., Ltd.), 10 February, 1986 (10.02.86), Full text; Figs. 1 to 4 (Family: none) | 1-2,5 |
| Y | JP 10-220932 A (Mitsubishi Heavy Industries, Ltd.), 21 August, 1998 (21.08.98), Par. Nos. [0031] to [0037]; Figs. 5 to 7 (Family: none) | 1,2 |
| Y | JP 4-217754 A (Hitachi, Ltd.), 07 August, 1992 (07.08.92), Full text; Figs. 1 to 3 (Family: none) | 1,2 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 March, 2003 (24.03.03) | 08 April, 2003 (08.04.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/00702 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 3-87578 A  (Mitsubishi Heavy Industries, Ltd.),<br>12 April, 1991 (12.04.91),<br>Full text; Figs. 1 to 7<br>(Family: none) | 1,2 |
| Y | JP 2001-263812 A  (Daikin Industries, Ltd.),<br>26 September, 2001 (26.09.01),<br>Full text; Figs. 1 to 5<br>(Family: none) | 5 |
| A | JP 2993180 B2  (Daikin Industries, Ltd.),<br>22 October, 1999 (22.10.99),<br>Full text; Figs. 1 to 4<br>(Family: none) | 3 |
| A | JP 11-304309 A  (Fujitsu General Ltd.),<br>05 November, 1999 (05.11.99),<br>Full text; Figs. 1 to 4<br>(Family: none) | 4 |

Form PCT/ISA/210 (continuation of second sheet) (July 1998)